# EUROPEAN PATENT APPLICATION

(11) **EP 1 455 317 A2**
(43) Date of publication of application: **08.09.2004**
(21) Application number: 03257158.0
(22) Date of filing: 13.11.2003
(51) Int. Cl.: G07F 19/00

(54) **Method for securing card transactions by using mobile device**

(30) Priority: 05.03.2003 US 382776
(71) Applicant: Shiu, Ming-Ching, Taipei 115 (TW)
(72) Inventor: Shiu, Ming-Ching, Taipei 115 (TW)
(74) Representative: Calderbank, Thomas Roger

(57) **Abstract**

A method for securing card transaction by using mobile device is a method of personal card transaction added with a mechanism of mobile device so that it is capable of preventing the card from being embezzled and counterfeited effectively. Hence, it is possible for the card proprietor to place more trust in the safety of card transaction.

## Description

The present invention relates to a method for securing card transaction by using mobile device and particularly to a card transaction method in which a mechanism of inter-verification by using mobile device is involved in the traditional or current process of bank card transaction such that an additional control can be obtained during the cardholder executing a transaction so as to prevent from embezzlement and enhance quality and order of financial transaction effectively.

It is known that the plastic currency is an innovative money for commercial transaction and the consumption behavior of a card proprietor with a bank card, a credit card or a substitute card for any other financial goods not only can solve the trouble problem resulting from the traditional transaction, which has to deal with cashes, but also is an important characterization of personal credit. Due to the plastic currency being mature and popular in the financial market with various advantages, which are enjoyed by the card proprietor because of many intimate and prominently honored additional services, the plastic currency has become globally acceptable for financial transaction.

However, the transaction way with plastic currency has some deficiencies resulting from highly development of technology and, especially, it is worth to be noted that one of the deficiencies is the counterfeitedplastic currency being fraudulently used seriously. Hence, the outlaw has acquired a great deal of unlawful profits from fraudulent card transactions and financial units, contractor stores and card proprietors have incurred great loses. In order to restrain the financial criminal offenses, various financial units have endeavored to develop an effective method for preventing the card from being counterfeited and being fraudulently used with the counterfeit card.

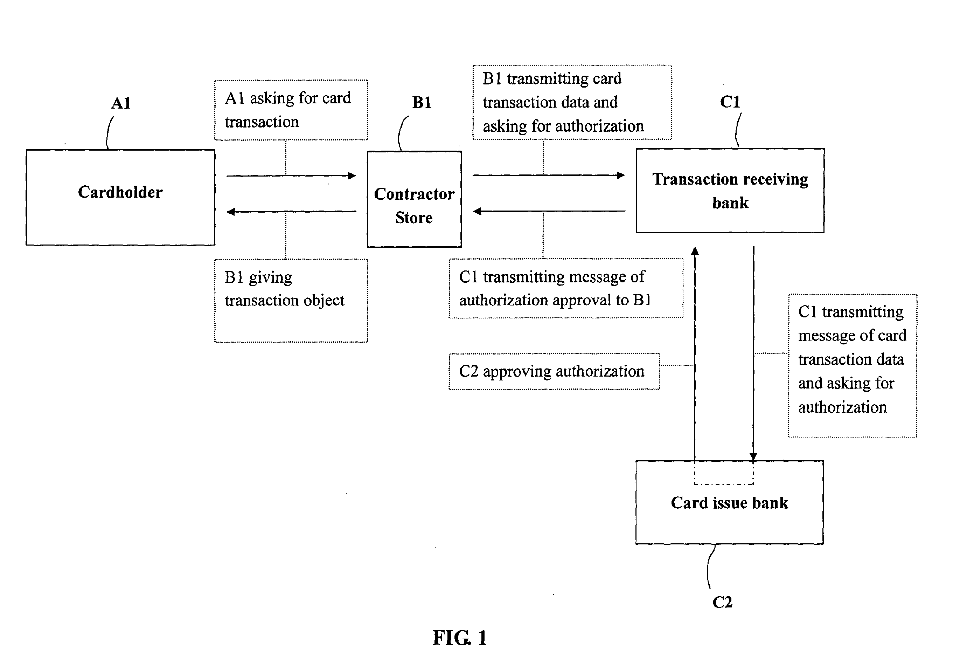

A process of the conventional card transaction illustrated in Fig. 1, is in that a cardholder A1 executes a card transaction at a contractor store B1; the contractor store B1 sends data of the card transaction such as consumption amount, contractor store code and card data to a receiving bank C1 for authorization request; the receiving bank C1 sends the data of the card transaction and a message concerning the authorization request to the card issue bank C2; and the card issue bank C2 sends an authorization approval to the receiving bank C1; and the receiving bank C1 further sends the authorization approval to the contractor store B1 to complete the transaction.

The preceding process of conventional card transaction still has the following shortcomings:
1. It is not possible to be known and stopped the unusual card transaction at the very first time once it occurs the fraudulent transaction.
2 . It is hard to lay down perfect and precise regulations of detection decision system in the computer of the bank. The card transaction is failed if the computer system of the card issue bank C2 finds out unusual data such as unusual transaction location, excessive amount of money or extraordinary number of transaction or finds out the card transaction exceeding the authorized credit extent agreed by the card issue bank C2 and the card proprietor A3.

Moreover, there are following side effects derived from the preceding conventional card transaction method:
1. The customer service person being introduced to the authorization makes the card transaction inconvenient and time consuming and the manual service of the customer service person provides less efficient than the automatic operation of the computer system.
2. Hiring customer service persons causes a serious burden of operation cost to the bank.

Accordingly, the present invention aims to overcome one or more deficiencies of the prior art.

A first aspect of the present invention may provide a secure transaction method by using a communication tool with which it is necessary to be verified the card transaction by an operator of communication tool before completing the card transaction. In case there is an unusual situation during the card transaction being executed so that it can restrain the fraudulent card transaction at the very first time effectively to reduce losses incurred to the card proprietor and the FENU.

A second aspect of the present invention may provide a secure transaction method by using a communication tool with which the message receiving and responding during the card transaction being executed are done by way of the communication tool intercommunicating with a computer system such that it is capable of enhancing the efficiency of executing the card transaction and it is possible to save the labor cost and the phone bill cost for the FENU.

A third aspect of the present invention may provide a secure transaction method by using a communication tool with which the FENU can notify the police department based on a special message during responding the card transaction as soon as the card transaction is forced to execute by an outlaw such that the personal safety of the card proprietor can be secured.

The other objects and features of the present invention can be more fully understood by reference to the following description of preferred embodiments and accompanying drawing, in which:
Fig. 1 is a block diagram simply illustrating a conventional card transaction system;
Fig. 2 is a block diagram illustrating a secure transaction method by using a communication tool of the present invention in a preferred embodiment thereof;
Fig. 3 is a block diagram illustrating a secure transaction method by using a communication tool of the present invention in another preferred embodiment thereof;
Fig. 4 is a block diagram illustrating a secure transaction method by using a communication tool of the present invention in a further preferred embodiment thereof;
Fig. 5 is a block diagram illustrating a secure transaction method by using a communication tool of the present invention in a further preferred embodiment thereof;
Figs. 6A and 6B are block diagrams illustrating an internal communication network with regard to a system connection route and message transmitter according to the present invention; and
Figs. 7A and 7B are block diagrams illustrating another internal communication network with regard to a system connection route and message transmitter according to the present invention.

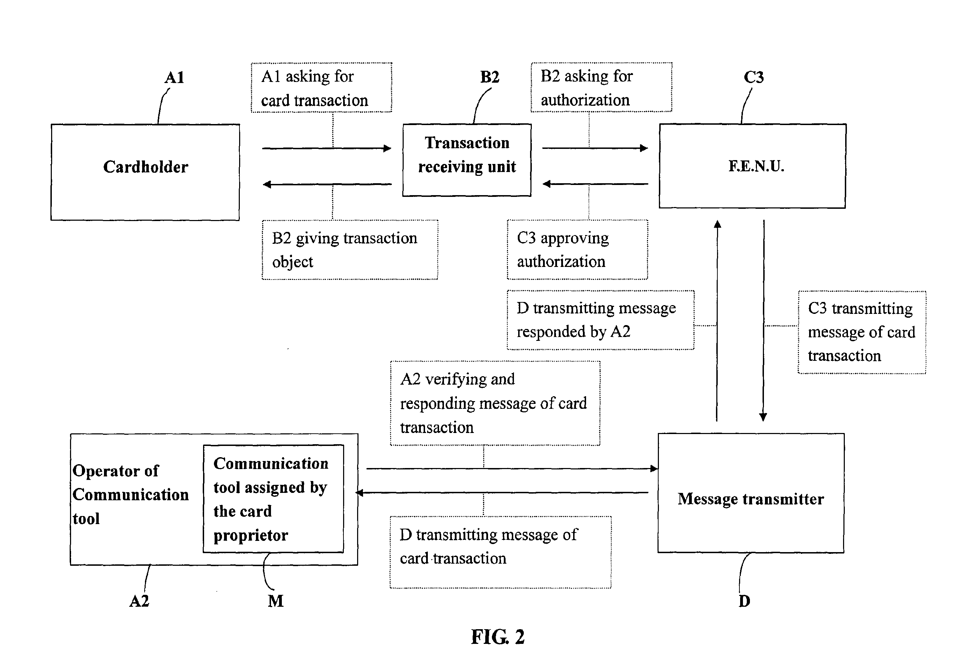

Referring to Figs. 2 to 5, 6A, 6B, 7A and 7B, a secure transaction method by using a communication tool according to the present invention provides a system structure including following parts:
1. A cardholder: the cardholder usually is the proprietor of a card but it is possible that the cardholder may be a person authorized by the proprietor or an embezzler.
2. An operator of the communication tool: the operator of the communication tool usually is the proprietor or a person authorized by the proprietor.
3. At least one communication tool assigned by the proprietor: the communication tool can be but not limited to a mobile phone, a PDA with a function of communication or a notebook computer with a function of communication.
4. A transaction receiving unit: the transaction receiving unit can be but not limited to a physical contractor store, a fictitious or virtual network store, an automatic transaction machine or a certified institute established by a financial security unit.
5. A FENU: the FENU can be but not limited to a card issue bank, a receiving bank, a financial organization or an international card issue organization.
6. A message transmitter: the message transmitter can be but not limited to a telecommunication gateway/connectivity provider, a telecommunication operator/carrier or a firm integrated by the telecommunication operator/carrier.

The present invention provides a system including at least the preceding six major parts associated with a proper control of a main unit of a computer in addition to an operation process so as to prevent a card frombeing embezzled effectively. It has to be mentioned that message dealt between the transaction receiving unit and the FENU is a transaction route authorized by the card and message dealt between the FENU and the message transmitter is a system connection route. Further, message dealt between the FENU and a communication tool assigned by the card proprietor is a wire and wireless telecommunication network such as PSTN, GSM, GPRS, PHS, CDMA, TDMA or W-CDMA and the transmitted message can be a single message such as SMS, EMS or MMS or a message combining two or more the preceding single messages. A response signal from the operator of communication tool can be attached with the original message, password, identification code of the communication signal or a special substitute code appointed by both the card proprietor and the FENU. Further, the preceding system can be connected to a wire or wireless network such as the traditional telecommunication line, the INTERNET, a satellite or the microwave. Alternately, the connection can be done with Communication Protocols, data formats and available software or operation systems agreed by all parties.

A further point has to be mentioned that the card proprietor normally is the cardholder and the operator of the communication tool during a card transaction being executed but, in practice, the cardholder can be the card proprietor, a person authorized by the proprietor or an embezzler and the operator of the communication tool can be the card proprietor or a person designated by the card proprietor. Nevertheless, it has to be understood that the structure of the system disclosed in the present invention is always work regardless what the identity of the actual cardholder or the operation of the communication tool is. In fact, the effect, which is to be achieved by the present invention, is the operator of communication tool can receive the message of card transaction from the communication tool designated by the card proprietor and take necessary actions to ensure the security of card transaction.

A structural process of the method according to the present invention is shown in Fig. 2 and steps thereof are listed in the following:
(1)The cardholder A1 conducts a card transaction at a transaction receiving unit B2;
(2)The transaction receiving unit transmits transaction information, such as transaction amount, a store designated code and card data, to FENU C3 and requests authorization;
(3)The FENU C3 sends the card transaction message to the communication tool D, which has been assigned by the card proprietor, through a message transmitter D;
(4)The operator of communication tool A2 confirms said card transaction message with the communication tool M and sends the transaction verified message to the FENU C3 via the message transmitter D;
(5)The FENU sends a message of authorization approval to the transaction receiving unit B2 after receiving the transaction confirmed message; and
(6)Said card transaction is completed after the transaction receiving unit B2 receiving the message of authorization approval.

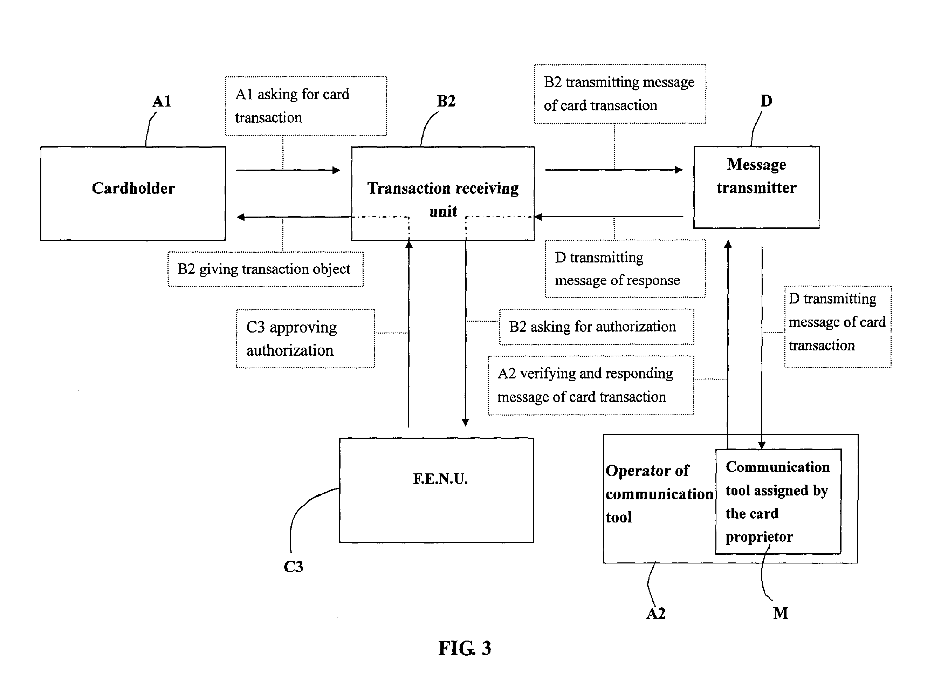

Another structural process of the method according to the present invention is shown in Fig. 3 and steps thereof are listed in the following:
(1)The cardholder A1 conducts a card transaction at a transaction receiving unit B2;
(2)The transaction receiving unit B2 transmits transaction data, such as transaction amount, a store designated code and card data, to a message transmitter D;
(3) The message transmitter D sends the card transaction message to the communication tool M assigned by the card proprietor;
(4)The operator of communication tool A2 confirms said card transaction message with the communication tool M and sends a message of transaction verification to the transaction receiving unit B2 via the message transmitter D;
(5)The transaction receiving unit B2 sends a message of authorization request to a FENU after receiving the message of transaction verification;
(6)The FENU sends a message of authorization approval to the transaction receiving unit B2 after receiving the message of transaction verification; and
(7)Said card transaction is completed after the transaction receiving unit B2 receiving the message of authorization verification.

The primary pursued effect of the preceding two embodiments is in that said card transaction is effective under a condition of the operator of communication tool A2 having verified the transaction message already. For the normal case, the cardholder A1 and the operator of the communication tool A2 should be the card proprietor or the cardholder is a person authorized by the card proprietor and the operator of the communication tool A2 is a person designated by the card proprietor. When the cardholder A1 executes the card transaction and the operator of communication tool A2 receives the transaction message on the communication tool M, the operator of communication tool A2 should verify said card transaction. In order to avoid the situation of being embezzled, the present invention can provide a function that the card transaction is cancelled in case of the operator of communication tool A2 making no response or refusing to confirm the card transaction. However, it may be inconvenient to the cardholder A1 in case of the card transaction being cancelled due to no sufficient time for the operator of communication tool A2 to verify the card transaction resulting from busy work or a momentary oversight. Hence, the invention also has an alternative that the card transaction is still completed even if the operator of communication tool A2 does not respond the message of transaction verification. Of course, if it is done in this way, the card transaction becomes less secure. Nevertheless, the present invention still has an achievement that the operator of communication tool A2 has acquired the card transaction message and related measures are capable of being adopted by the operator of communication tool A2.

Another pursued effect of the preceding two embodiments is in that the card proprietor can send out a help message during sending the card transaction message for a response of transaction verification. For this option, the card proprietor can agree on an assigned code with the FENU in advance and the assigned code stands for message of asking verification for the card transaction and asking for help. In case of the card proprietor being coerced by an outlaw to execute the card transaction, the card proprietor keys in the assigned code on the communication tool M and it means the card proprietor has sent out a help message during sending out the message of card transaction for asking verification. The FENU can notify the police department to secure the personal safety of the card proprietor by way of the preceding verification procedure .

It has to be noted specifically that the response message or the assigned code done by the operator of communication tool stands for not only verifying or not verifying the card transaction message but also content defined by the card proprietor and the FENU in advance.

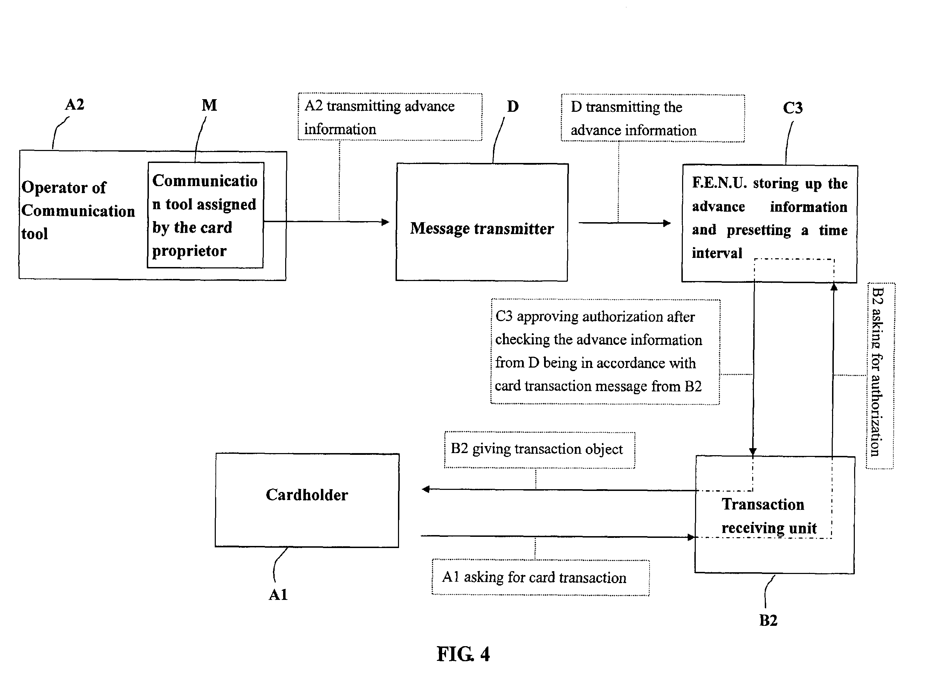

A further structural process of the method according to the present invention is shown in Fig. 4 and steps thereof are listed in the following:
(1)The operator of communication tool A2 transmits an advance information, which includes all or part of data such as a device identification number, a caller' s identification number, a designated code agreed by both the card proprietor and the card issue bank and an intention to exert a card transaction, to the message transmitter D by using a communication tool M assigned by the card proprietor;
(2)The message transmitter D then transmits the advance information to the FENU C3;
(3)The FENU stores up the advance information and presets a time interval;
(4)The cardholder A1 executes a card transaction at the transaction receiving unit B2;
(5)The transaction receiving unit B2 transmits the card transaction message to the FENU C3 for a authorization request
(6)The process is terminated and the stored advance information becomes unusable automatically if step (3) to step (5) are not completed within the preset time; and
(7)The FENU sends back a message of authorization approval to the transaction receiving unit B2 after the stored advance information having been checked and being in accordance with the card transaction message sent by the transaction receiving unit B2.

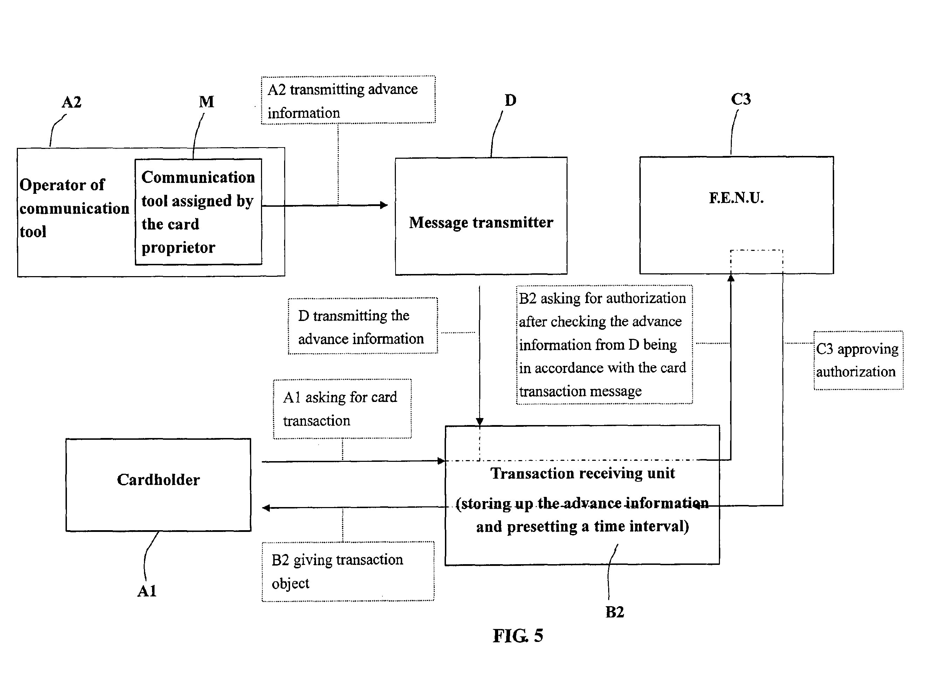

A further structural process of the method according to the present invention is shown in Fig. 5 and steps thereof are listed in the following:
(1)The operator of communication tool A2 transmits an advance information, which includes all or part of data such as a device identification number, a caller' s identification number, a designated code agreed by both the card proprietor and the card issue bank and an intention to exert a card transaction, to the message transmitter D by using a communication tool M assigned by the card proprietor right before a card transaction being executed;
(2)The message transmitter D transmits the advance information to the transaction receiving unit B2;
(3) The transaction receiving unit stores up the advance information and preset a time interval;
(4)The cardholder A1 executes the card transaction at the transaction receiving unit B2;
(5)The transaction receiving unit B2 transmits the message of card transaction to the FENU and asks for authorization after the stored advance information having been checked and being in accordance with the card transaction message;
(6)The process is terminated and the stored advance information becomes unusable automatically if step (3) to step (5) are not completed within the preset time;
(7)The FENU sends back a message of authorization approval to the transaction receiving unit B2; and
(8)The card transaction is completed after the transaction receiving unit having received the message of authorization approval.

The main pursued effect of the preceding two further embodiments is in that the operator of communication tool A2 has to send the message of card transaction being ready to be executed by the cardholder A1 to the FENU C3 or the transaction receiving unit B2 and the FENU C3 or the transaction receiving unit B2 verifies the card transaction message of the cardholder A1 before the card transaction being completed. Accordingly, the object of securing the card transaction can be achieved substantially.

Another pursued effect of the preceding two further embodiments is in that although some of card transactions have a time limit to respond the transaction during processing the authorization route, the operator of communication tool A2 sending the message of card transaction ready to be executed to the FENU or the transaction receiving unit B2 in advance not only is not affected by the response time of the preceding transaction authorization procedure but also can reduce the time for the FENU C3 treating the card transaction message.

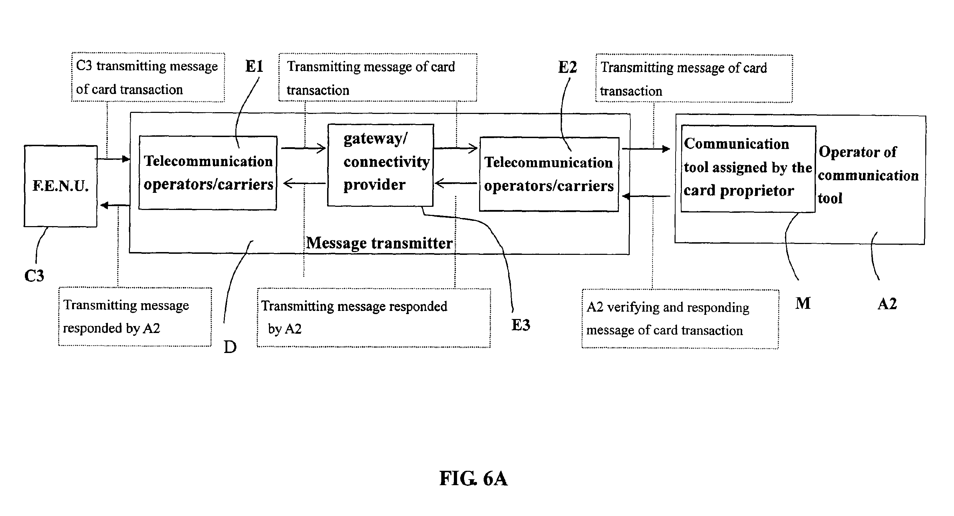

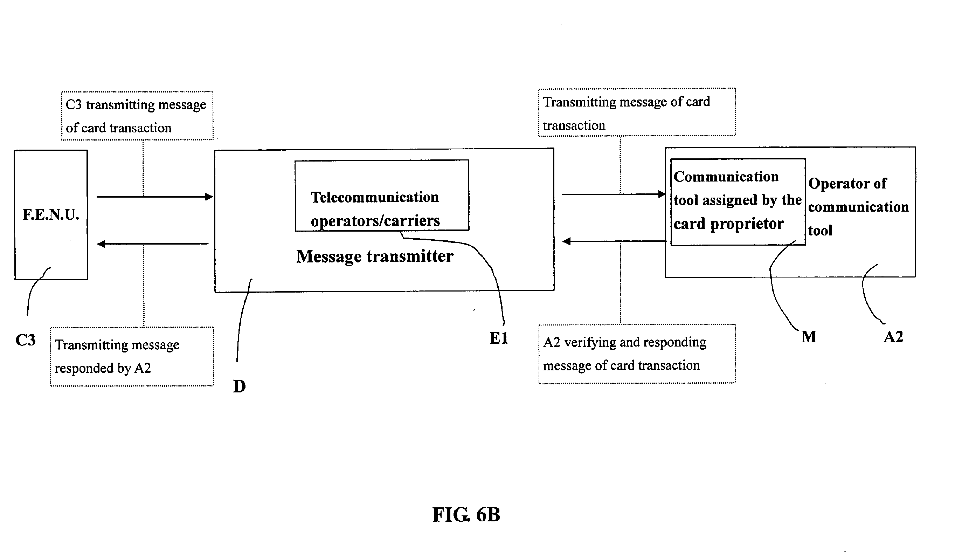

Referring to Figs. 6A and 6B, a structural processes for a system connection route and an internal communication network of the message transmitter D of the present invention are illustrated. The FENU can transmit a card transaction message to the communication tool M assigned by the card proprietor via a telecommunication operator/carrier E1, a telecommunication gateway/connectivity provider E3 and then a telecommunication operator/carrier E2. The telecommunication operator/carrier E2 is another or the same telecommunication operator/carrier E1. The operator of communication tool A2 verifies the card transaction message on the communication tool M and a message of transaction verification is sent back to the FENU C3 sequentially via the telecommunication operator/carrier E2 , telecommunication gateway/connectivity provider E3, and the telecommunication operator/carrier E1 according to the original telecommunication network and system connection route.

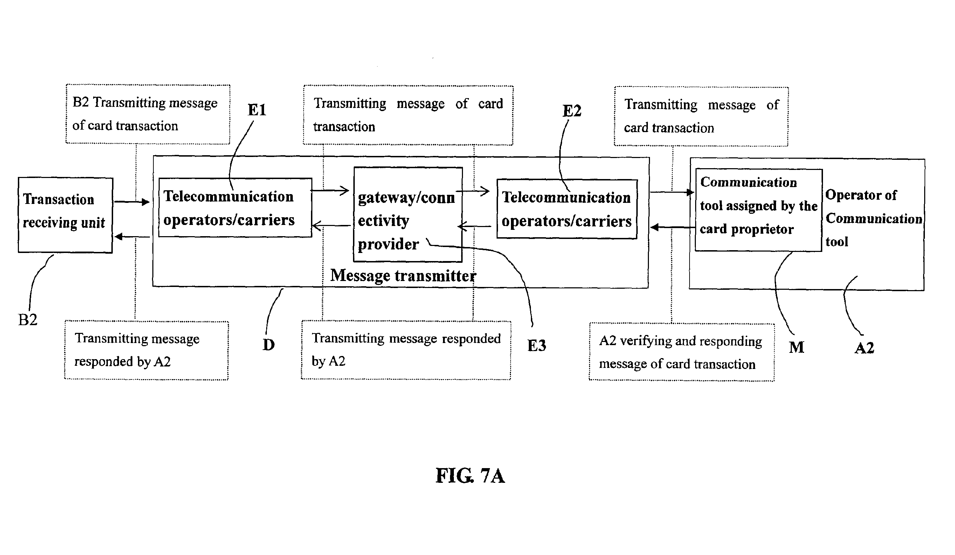

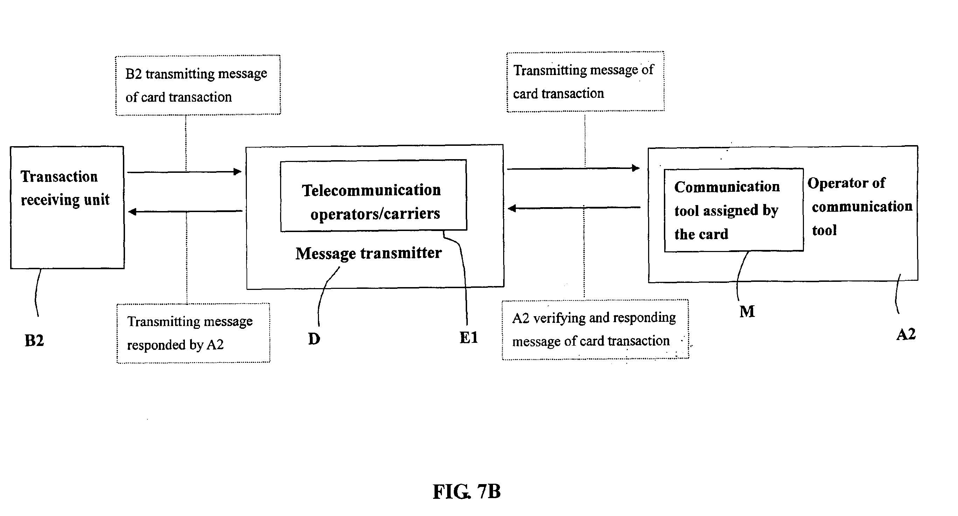

Referring to Figs. 7A and 7B, a structural process of another system connection route with message transmitter D are illustrated. Said another system connection with message transmitter D shown in Figs. 7A and 7B is different from that shown in Figs. 6A and 6B in that the FENU in Figs. 6A and 6B are replaced with the transaction receiving unit B2.

It has to be noted specifically that the message transmitter D shown in Figs. 6A and 7A is composed of the telecommunication operators/carriers E1, E2 and the telecommunication gateway/connectivity provider E3 and the message transmitter D shown in Figs. 6B and 7B can be the telecommunication operator/carrier E1 OR E2. It is noted that the telecommunication operator/carrier E1 OR E2 can be the same or different from each other and it is possible to have one or more telecommunication operator/carriers E2.

It is worth to note that message transmission of the present invention can stride across entities such as different telecommunication companies, different national territories, wire communication network systems and wireless communication network systems such as PSTN, GRRS, PHS, CDMA, TDMA and W-CDMA. Wherein, message transmission or connection between telecommunication gateways is carried out by way of gateway system, which are in responsible for translating, storing and forwarding Protocol and data format, and these are prior art so that no detail will be described further.

Furthermore, a further embodiment of the present invention can be extended to add an encryption and/or digital signature to the message sent by the communication tool in addition to protection of the credit card, the bank card or any other substitute card for financial goods from being embezzled so that the present invention can be implemented to various financial goods transactions and transaction behaviors for non-physical goods such as business for various financial security transactions and verification required transactions such as transfer or withdraw done with ATM.

It is appreciated that the present invention provides the following features and advantages:
1. The present invention adopts a procedure of authorization before completing a card transaction so that it is capable of preventing card embezzlement behavior effectively by way of a step of the card transaction message being required verification by the operator of communication tool in case of the card being embezzled. Hence, it is possible to avoid any loss from the FENU, the transaction receiving unit and the card proprietor.
2. The method of the present invention utilizes the computer control system of the FENU to execute detection and the network of the message transmitter to execute transmission and receiving information related to the card transaction so that it is possible for the FENU to save a lot of labor cost.
3. The present invention adopts inter-verification for the card transaction so that the card proprietor can send out a help message additionally during the proprietor responding a verification for the card transaction by using an assigned communication tool in case of the card proprietor being forced to execute the card transaction by an outlaw. Hence, the FENU has chance to notify the police department as soon as the help message is received to protect personal safety and to frighten and strike the criminals.

While the invention has been described with reference to preferred embodiments thereof, it is to be understood that modifications or variations may be easily made without departing from the spirit of this invention, which is defined by the appended claims.

## Claims

1. A method for securing card transaction by using a mobile device providing a cardholder, an operator of communication tool, a transaction receiving unit, a message transmitter, at least a communication tool assigned by a card proprietor and a financial exchange network unit (FENU) and comprising following steps:
(1)the cardholder executing a card transaction at the transaction receiving unit;
(2)the transaction receiving unit transmitting a message of the card transaction to the FENU and requesting for an authorization;
(3)the FENU sending the card transaction message to the communication tool assigned by the card proprietor via the message transmitter;
(4) the operator of communication tool verifying said card transaction message on the communication tool and sending a response message of verification to the FENU via the message transmitter D;
(5) the FENU sending an authorization approval to the transaction receiving unit after receiving the response message of verification; and
(6)said card transaction being completed after the transaction receiving unit having received the authorization approval.

2. The method for securing card transaction by using mobile device according to claim 1, wherein the card transaction is cancelled while the operator of communication tool does not make a response to the card transaction or refuses to verify the card transaction or the response is indicated the card transaction being cancelled or a help message.

3. The method for securing card transaction by using mobile device according to claim 1, wherein the card transaction is effected even if the operator of communication tool does not make a response to the card transaction or the response is indicated the card transaction being cancelled or a help message.

4. The method for securing card transaction by using mobile device according to claim 1, wherein the communication tool is a mobile device, a personal digital assistant (PDA) or a notebook computer.

5. The method for securing card transaction by using mobile device according to claim 1, wherein the card can be a credit card, a bank card or any other substitute card for financial goods.

6. The method for securing card transaction by using mobile device according to claim 1, wherein the FENU can be a card issue bank, a transaction receiving bank, a financial organization or international card issue organization or a financial exchange organization.

7. The method for securing card transaction by using mobile device according to claim 1, wherein the message transmitter can be a telecommunication gateway/connectivity provider associated with a telecommunication operator/carrier.

8. The method for securing card transaction by using mobile device according to claim 1, wherein the message transmitter can be a telecommunication gateway/connectivity provider.

9. The method for securing card transaction by using mobile device according to claim 1, wherein the message transmitter can be a telecommunication operator/carrier.

10. The method for securing card transaction by using mobile device according to claim 1, wherein the message transmitter can be a communication network set up by a message transmitter.

11. The method for securing card transaction by using mobile device according to claim 1, wherein the transaction receiving unit can be a physical contractor store, a fictitious or virtual network store, an automatic transaction machine (ATM) or a certification institute.

12. A method for securing card transaction by using mobile device providing a transaction structure providing a cardholder, an operator of communication tool, a transaction receiving unit, a message transmitter, a communication tool assigned by a card proprietor and a financial exchange network unit (FENU) and comprising following steps:
(1)the cardholder executing a card transaction at a transaction receiving unit;
(2)the transaction receiving unit transmitting a message of card transaction to a message transmitter after the card being executed;
(3)the message transmitter sending the message of card transaction to the communication tool assigned by the card proprietor;
(4) the operator of communication tool verifying said card transaction message on the communication tool and sending a message of verification to the transaction receiving unit via the message transmitter;
(5)the transaction receiving unit sending a message of authorization request to the FENU after receiving the message of verification;
(6) The FENU sending a message of authorization approval to the transaction receiving unit after receiving the message of authorization request; and
(7)Said card transaction is completed after the transaction receiving unit receiving the message of authorization approval.

13. The method for securing card transaction by using mobile device according to claim 12, wherein the card transaction is cancelled while the operator of communication tool does not make a response to the card transaction or refuses to verify the card transaction or the response is indicated the card transaction being cancelled or a help message.

14. The method for securing card transaction by using mobile device according to claim 12, wherein the card transaction is effected even if the operator of communication tool does not make a response to the card transaction message or the response is indicated the card transaction being cancelled or a help message.

15. The method for securing card transaction by using mobile device according to claim 12, wherein the communication tool is a mobile device, a mobile phone, a personal digital assistant (PDA) or a notebook computer.

16. The method for securing card transaction by using mobile device according to claim 12, wherein the card can be a credit card, a bank card or any other substitute card for financial goods.

17. The method for securing card transaction by using mobile device according to claim 12, wherein the FENU can be a card issue bank, a transaction receiving bank, a financial organization or international card issue organization.

18. The method for securing card transactionby using mobile device according to claim 12, wherein the message transmitter can be a telecommunication gateway/connectivity provider associated with a telecommunication operator/carrier.

19. The method for securing card transaction by using mobile device according to claim 12, wherein the message transmitter can be a telecommunication gateway/connectivity provider.

20. The method for securing card transaction by using mobile device according to claim 12, wherein the message transmitter can be a telecommunication operator/carrier.

21. The method for securing card transactionby using mobile device according to claim 12, wherein the message transmitter can be a communication network set up by a message transmitter.

22. The method for securing card transactionby using mobile device according to claim 12, wherein the transaction receiving unit can be a physical contractor store, a fictitious network store, an automatic transaction machine (ATM) or a certification institute provided by a financial insurance unit.

23. A method for securing card transaction by using mobile device providing a cardholder, an operator of communication tool, a transaction receiving unit, a message transmitter, at least a communication tool assigned by a card proprietor and a financial exchange network unit (FENU) and comprising following steps:
(1)the operator of communication tool transmitting an advance information including all or part of data such as a device identification number, a caller's identification number, a designated code agreed by both the card proprietor and the card issue bank and an intention to execute a card transaction, to the message transmitter with the communication tool assigned by the card proprietor;
(2)the message transmitter transmitting the advance information to the FENU;
(3)the FENU storing up the advance information and presetting a time interval;
(4)the cardholder executing the card transaction at the transaction receiving unit;
(5)the transaction receiving unit transmitting the card transaction message to the FENU for an authorization request;
(6)the process being terminated and the stored advance information becoming unusable automatically if step (3) to step (5) are not completed within the preset time;
(7)the FENU sending back an authorization approval to the transaction receiving unit after checking the advance information having been in accordance with the card transaction message sent by the transaction receiving unit; and
(8)said card transaction being completed after the transaction receiving unit receiving the authorization approval.

24. The method for securing card transaction by using mobile device according to claim 23, wherein the communication tool is a mobile device, a mobile phone, a personal digital assistant (PDA) or a notebook computer.

25. The method for securing card transaction by using mobile device according to claim 23, wherein the card can be a credit card, a bank card or any other substitute card for financial merchandises.

26. The method for securing card transaction by using mobile device according to claim 23, wherein the FENU can be a card issue bank, a transaction receiving bank, a financial organization or international card issue organization.

27. The method for securing card transaction by using mobile device according to claim 23, wherein the message transmitter can be a telecommunication gateway/connectivity provider associated with a telecommunication operator/carrier.

28. The method for securing card transaction by using mobile device according to claim 23, wherein the message transmitter can be a telecommunication gateway/connectivity provider.

29. The method for securing card transaction by using mobile device according to claim 23, wherein the message transmitter can be a telecommunication operator/carrier.

30. The method for securing card transaction by using mobile device according to claim 23, wherein the message transmitter can be a communication network set up by a message transmitter.

31. The method for securing card transaction by using mobile device by using a communication tool according to claim 23, wherein the transaction receiving unit can be a physical contractor store, a fictitious or virtual network store, an automatic transaction machine (ATM) or a certification institute.

32. A method for securing card transaction by using mobile device providing a cardholder, an operator of communication tool, a transaction receiving unit, a message transmitter, at least a communication tool assigned by a card proprietor, a financial exchange network unit (FENU) and comprising following steps:
(1)the operator of communication tool transmitting an advance information including all or part of data such as a device identification number, a caller's identification number, a designated code agreed by both the card proprietor and the card issue bank and an intention to execute a card transaction, to the message transmitter with the communication tool assigned by the card proprietor;
(2)the message transmitter transmitting the advance information to the transaction receiving unit;
(3)the transaction receiving unit storing up the advance information and presetting a time interval;
(4)the cardholder executing a card transaction at the transaction receiving unit;
(5)the transaction receiving unit transmitting a message of card transaction to the FENU and asking for authorization after checking the advance information having been in accordance with the message of card transaction;
(6)the process being terminated and the stored advance information becoming unusable automatically if step (3) to step (5) being not completed within the preset time;
(7)the FENU sending back a message of authorization approval to the transaction receiving unit; and
(8)the card transaction being completed after the transaction receiving unit having received the message of authorization approval.

33. The method for securing card transactionby using mobile device according to claim 32, wherein the communication tool is a mobile device, a mobile phone, a personal digital assistant (PDA) or a notebook computer.

34. The method for securing card transactionby using mobile device according to claim 32, wherein the card can be a credit card, a bank card or any other substitute card for financial goods.

35. The method for securing card transactionby using mobile device according to claim 32, wherein the FENU can be a card issue bank, a transaction receiving bank, a financial organization or international card issue organization.

36. The method for securing card transactionby using mobile device according to claim 32, wherein the message transmitter can be a telecommunication gateway/connectivity provider associated with a telecommunication operator/carrier.

37. The method for securing card transaction by using mobile device according to claim 32, wherein the message transmitter can be a telecommunication gateway/connectivity provider.

38. The method for securing card transaction by using mobile device according to claim 32, wherein the message transmitter can be a telecommunication operator/carrier.

39. The method for securing card transactionby using mobile device according to claim 32, wherein the message transmitter can be a communication network set up by a message transmitter.

40. The method for securing card transactionby using mobile device according to claim 32, wherein the transaction receiving unit can be a physical contractor store, a fictitious or virtual network store, an automatic transaction machine (ATM) or a certification institute.
